# EUROPÄISCHE PATENTSCHRIFT

(11) **EP 4 094 000 B1**
(45) Veröffentlichungstag und Bekanntmachung des Hinweises auf die Patenterteilung: **01.11.2023**
(21) Anmeldenummer: 20789006.2
(22) Anmeldetag: 28.09.2020
(51) Int. Cl.: F16K 11/074, F16K 31/385, G05G 1/02, G05G 1/08, E03C 1/02

(54) **STEUERVENTIL FÜR ZUMINDEST EINE SANITÄRARMATUR MIT EINEM MEMBRANVENTIL UND EINEM MEHRWEGEVENTIL**
CONTROL VALVE FOR AT LEAST ONE SANITARY FITTING, SAID CONTROL VALVE COMPRISING A DIAPHRAGM VALVE AND A MULTI-WAY VALVE
SOUPAPE DE COMMANDE POUR AU MOINS UNE ROBINETTERIE SANITAIRE, LADITE SOUPAPE DE COMMANDE COMPRENANT UNE SOUPAPE À MEMBRANE ET UNE SOUPAPE À VOIES MULTIPLES

(30) Priorität: 24.01.2020 DE 102020101691
(43) Veröffentlichungstag der Anmeldung: 30.11.2022
(73) Patentinhaber: Grohe AG, 58675 Hemer (DE)
(72) Erfinder: MAINKA, David, 58640 Iserlohn (DE); BUCHMÜLLER, Janik, 58239 Schwerte (DE); KUKLA, Sebastian, 44789 Bochum (DE)
(86) Internationale Anmeldenummer: PCT/EP2020/077077
(87) Internationale Veröffentlichungsnummer: WO 2021/148151

(56) Entgegenhaltungen:
- EP-A1- 3 147 546
- EP-A1- 3 599 399
- DE-U1-202018 105 509

## Beschreibung

Die vorliegende Erfindung betrifft ein Steuerventil für eine Sanitärarmatur. Solche Sanitärarmaturen dienen der bedarfsgerechten Bereitstellung einer Flüssigkeit zum Beispiel an Duschen, Badewannen, Spülbecken oder Waschbecken.

Mit Steuerventilen kann die Flüssigkeit beispielsweise unterschiedlichen Strahlbildnern der Sanitärarmatur, beispielsweise einer Brause einer Dusche, zuführbar sein. Mittels der Strahlbildner ist die Flüssigkeit durch die Sanitärarmatur mit unterschiedlichen Strahlarten, beispielsweise Vollstrahlen, Regenstrahlen, Massagestrahlen, etc., abgebbar. Weiterhin kann die Flüssigkeit mit Steuerventilen auch unterschiedlichen Flüssigkeitsausläufen einer Sanitärarmatur zuführbar sein. Beispielsweise kann die Flüssigkeit durch das Steuerventil einem Wannenauslauf einer Badewanne und/oder einer Handbrause gezielt zuführbar sein. Nachteilig an den bekannten Steuerventilen ist teilweise, dass diese einen hohen Bauraumbedarf aufweisen und nicht einfach sowie intuitiv bedienbar sind.

Aus der EP 3 147 546 A1 ist ein Steuerventil bekannt geworden mit einem Membranventil zum Öffnen und Schließen eines Flüssigkeitskanals und einem stromabwärts des Membranventils angeordneten Mehrwegeventil. Auch dieses Steuerventil weist allerdings einen relativ hohen Bauraumbedarf auf und ist relativ wenig intuitiv bedienbar.

Aufgabe der Erfindung ist es daher, die mit Bezug auf den Stand der Technik geschilderten Probleme zumindest teilweise zu lösen und insbesondere ein Steuerventil für eine Sanitärarmatur anzugeben, das besonders kompakt sowie leicht zu bedienen ist.

Diese Aufgaben werden gelöst mit einem Steuerventil gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Steuerventil für eine Sanitärarmatur bei, das zumindest die folgenden Komponenten aufweist:
- ein Gehäuse mit zumindest einem Zulauf für eine Flüssigkeit;
- ein Membranventil zum Öffnen und Schließen eines Strömungskanals des Steuerventils, wobei das Membranventil eine Membran und eine mit dem zumindest einen Zulauf verbundene Gegendruckkammer aufweist und wobei in der Membran eine Pilotöffnung ausgebildet ist, die die Gegendruckkammer mit dem Strömungskanal verbindet;
- ein Mehrwegeventil, das stromabwärts des Membranventils angeordnet ist und eine Mehrzahl von Abläufen für die Flüssigkeit aufweist; und
- eine Steuerung zum Steuern des Membranventils und des Mehrwegeventils, wobei die Steuerung einen Steuerstab aufweist, der sich durch die Pilotöffnung der Membran erstreckt und wobei der Steuerstab zum Steuern des Membranventils in einer Längsrichtung verstellbar und zum Steuern des Mehrwegeventils drehbar ist.

Das Steuerventil ist beispielsweise in einer Sanitärarmatur angeordnet oder über Schlauchleitungen und/oder Rohrleitungen mit einer Sanitärarmatur verbindbar. Sanitärarmaturen dienen der bedarfsgerechten Bereitstellung einer Flüssigkeit, insbesondere Wasser, an beispielsweise Duschen, Badewannen, Spülbecken oder Waschbecken. Das Steuerventil kann insbesondere zumindest teilweise unter Putz bzw. zumindest teilweise in einer Wand oder einem Träger angeordnet sein.

Das Steuerventil umfasst ein Gehäuse mit zumindest einem Zulauf, über den das Steuerventil an eine Flüssigkeitsquelle, zum Beispiel ein öffentliches Flüssigkeitsversorgungsnetz, anschließbar ist. Dem zumindest einen Zulauf kann ein Mischventil oder eine Mischkartusche vorgeschaltet sein, mit dem ein Kaltwasser mit einer Kaltwassertemperatur und ein Warmwasser mit einer Warmwassertemperatur zu einem Mischwasser mit einer gewünschten Mischwassertemperatur mischbar ist. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Das Gehäuse kann mehrteilig ausgebildet sein. Weiterhin kann das Gehäuse zumindest teilweise aus Kunststoff und/oder Metall, wie zum Beispiel Messing, bestehen.

Die über den zumindest einen Zulauf zuströmende Flüssigkeit ist durch das Gehäuse einem Membranventil zuführbar. Hierzu können in dem Gehäuse zumindest ein Zulaufkanal und/oder zumindest eine Zulaufkammer ausgebildet sein. Das Membranventil dient dem Öffnen und Schließen eines Strömungskanals des Steuerventils, über den die Flüssigkeit einem Mehrwegeventil des Steuerventils zuführbar ist. Das Mehrwegeventil ist stromabwärts des Membranventils angeordnet und weist eine Mehrzahl von Abläufen für die Flüssigkeit auf. Beispielsweise kann das Mehrwegeventil 2 bis 10, bevorzugt 2 bis 5 Abläufe oder besonders bevorzugt 2 oder 3 Abläufe aufweisen. Jeder der Abläufe kann beispielsweise mit einem separaten Strahlbildner der Sanitärarmatur verbunden sein. Das Membranventil umfasst eine Membran und eine mit dem zumindest einen Zulauf verbundene Gegendruckkammer. Die Flüssigkeit kann aus den Zulaufkanälen und/oder Zulaufkammern des Gehäuses über eine Ausgleichsbohrung in der Membran des Membranventils und/oder sonstigen Komponenten des Steuerventils, beispielsweise des Gehäuses, in die Gegendruckkammer des Membranventils fließen, sodass die Flüssigkeit auf beiden Seiten der Membran den gleichen Flüssigkeitsdruck aufweist. Da die Membran die Gegendruckkammer mit einer größeren Fläche begrenzt als der zumindest eine Zulaufkanal und/oder die zumindest eine Zulaufkammer, ist die aus dem Flüssigkeitsdruck der Flüssigkeit in der Gegendruckkammer resultierende Kraft auf die Membran größer als die aus dem Flüssigkeitsdruck der Flüssigkeit in dem zumindest einen Zulaufkanal und/oder der zumindest einen Zulaufkammer resultierende Kraft. Hierdurch wird die Membran auf einen Ventilsitz gedrückt, sodass das Membranventil geschlossen ist. In der Membran ist eine Pilotöffnung ausgebildet, die die Gegendruckkammer mit dem Strömungskanal verbindet. Die Pilotöffnung kann beispielsweise als Loch in der Membran ausgebildet sein.

Das Membranventil und das Mehrwegeventil sind durch eine (gemeinsame und/oder einzige) Steuerung steuerbar. Die Steuerung umfasst zumindest einen Steuerstab, der sich durch die Pilotöffnung der Membran erstreckt. Der Steuerstab ist insbesondere stabförmig, stiftförmig und/oder (im Wesentlichen) gerade ausgebildet. Weiterhin kann der Steuerstab beispielsweise nach Art einer Spindel ausgestaltet sein. Weiterhin ist der Steuerstab durch einen Benutzer des Steuerventils zum Steuern des Membranventils in einer Längsrichtung verstellbar und zum Steuern des Mehrwegeventils drehbar. Hierzu kann sich der Steuerstab mit zumindest einem seiner beiden längsseitigen Enden aus dem Gehäuse erstrecken. Das Membranventil ist beispielsweise durch eine Druckbetätigung des Steuerstabs durch einen Benutzer öffnenbar oder schließbar. Hierzu kann der Steuerstab durch den Benutzer beispielsweise zwischen einer Schließstellung, in der das Membranventil geschlossen ist, und einer Öffnungsstellung, in der das Membranventil geöffnet ist, in der Längsrichtung verstellbar sein. In der Schließstellung kann der Steuerstab weiter in das Gehäuse verstellt sein als in der Öffnungsstellung. Der Steuerstab kann in der Schließstellung und/oder der Öffnungsstellung justierbar und/oder (vergleichbar einer Kugelschreibermine) verrastbar sein. Die Längsrichtung des Steuerstabs erstreckt sich insbesondere parallel zu einer Längsachse des Steuerstabs. Weiterhin ist der Steuerstab insbesondere um seine Längsachse drehbar. Die Längsachse kann daher mit einer Drehachse des Steuerstabs übereinstimmen. Der Steuerstab ist (direkt oder indirekt) derart mit dem Mehrwegeventil gekoppelt, dass das Mehrwegeventil durch die Drehung des Steuerstabs um die Drehachse betätigbar bzw. steuerbar ist. Durch die Drehung des Steuerstabs ist somit durch einen Benutzer einstellbar, über welchen Ablauf bzw. über welche Abläufe des Mehrwegeventils die Flüssigkeit abfließt. Zudem kann über die Drehung des Steuerstabs steuerbar sein, mit welchem Volumenstrom die Flüssigkeit über welchen Ablauf des Mehrwegeventils abläuft. Der Steuerstab ermöglicht daher die Funktionen eines Druckventils und eines sogenannten Aquadimmers platzsparend in einem (einzigen) Steuerventil zu integrieren. Zudem ist das Steuerventil durch Drücken und Drehen des Steuerstabs besonders leicht zu bedienen.

Das Membranventil kann an einem ersten längsseitigen Ende des Strömungskanals angeordnet sein. Hierdurch ist der Strömungskanal an seinem ersten längsseitigen Ende durch das Membranventil öffnenbar oder schließbar. Bei dem ersten längsseitigen Ende des Strömungskanals handelt es sich insbesondere um dasjenige längsseitige Ende des Strömungskanals, das stromaufwärts angeordnet ist. Das erste längsseitige Ende des Strömungskanals kann hierdurch einen Ventilsitz für das Membranventil bilden. Der Strömungskanal kann zumindest teilweise rohrförmig ausgebildet sein.

Der Strömungskanal kann das Membranventil mit dem Mehrwegeventil verbinden. Dies bedeutet unter anderem, dass die Flüssigkeit bei geöffnetem Membranventil über den Strömungskanal zu dem Mehrwegeventil strömen kann. Weiterhin kann sich der Steuerstab von der Membran durch den Strömungskanal in Richtung des Mehrwegeventils erstrecken.

An einer Umfangsfläche des Steuerstabs kann ein Abdichtelement angeordnet sein, mit dem die Pilotöffnung der Membran durch den Steuerstab verschließbar ist. Das Abdichtelement erstreckt sich auf der Umfangsfläche insbesondere um 360° um den Steuerstab. Hierzu kann das Abdichtelement insbesondere ringförmig ausgebildet sein. Beispielsweise kann das Abdichtelement nach Art eines umlaufenden Kragens oder eines O-Rings ausgebildet sein. Zudem kann das Abdichtelement zumindest teilweise aus Kunststoff oder Gummi bestehen. Weiterhin kann das Abdichtelement fest mit dem Steuerstab verbunden sein. Hierdurch ist das Abdichtelement mit dem Steuerstab insbesondere in der Längsrichtung verstellbar. Die Pilotöffnung ist zwischen dem Steuerstab und der Membran insbesondere als Ringspalt ausgebildet. Befindet sich der Steuerstab in der Schließstellung, liegt das Abdichtelement an der Pilotöffnung der Membran an, sodass diese geschlossen ist. Hierdurch kann keine Flüssigkeit aus der Gegendruckkammer in den Steuerkanal fließen. Befindet sich der Steuerstab in der Öffnungsstellung, ist das Abdichtelement jedoch von der Pilotöffnung abgehoben, sodass Flüssigkeit aus der Gegendruckkammer über die Pilotöffnung in den Strömungskanal fließen kann.

Das Mehrwegeventil kann eine statische Scheibe und eine auf der statischen Scheibe bewegbar angeordnete dynamische Scheibe aufweisen. Die statische Scheibe und/oder die dynamische Scheibe können insbesondere zumindest teilweise aus Kunststoff oder Keramik bestehen. Weiterhin sind die statische Scheibe und/oder die dynamische Scheibe insbesondere flach und/oder (im Wesentlichen) rund ausgebildet. Weiterhin können die statische Scheibe und/oder die dynamische Scheibe in dem Gehäuse angeordnet sein. Die statische Scheibe ist insbesondere relativ zu dem Steuerventil und/oder dem Gehäuse nicht bewegbar. Bei der Bewegung der dynamischen Scheibe gleitet die dynamische Scheibe insbesondere auf der statischen Scheibe bzw. auf einer Oberfläche der statischen Scheibe.

Die dynamische Scheibe kann durch den Steuerstab drehbar sein. Hierzu ist die dynamische Scheibe insbesondere (direkt oder indirekt) mit dem Steuerstab gekoppelt. Eine Drehachse der dynamischen Scheibe verläuft insbesondere parallel oder koaxial zu der Drehachse des Steuerstabs.

Die dynamische Scheibe kann zumindest eine Steueröffnung aufweisen. Die Steueröffnung ist insbesondere nach Art eines Lochs in der dynamischen Scheibe ausgebildet. Die Steueröffnung ist hierbei insbesondere nicht konzentrisch zu der Drehachse der dynamischen Scheibe ausgebildet, sodass die Steueröffnung bei einer Drehung der dynamischen Scheibe in unterschiedliche Bereiche der statischen Scheibe bewegbar ist. Weiterhin erstreckt sich die Steueröffnung, insbesondere in der Längsrichtung des Steuerstabs, vollständig durch die dynamische Scheibe. Die Flüssigkeit ist durch den Strömungskanal insbesondere der Steueröffnung der dynamischen Scheibe zuführbar. Durch die Bewegung der dynamischen Scheibe ist die Flüssigkeit gezielt unterschiedlichen Bereichen der statischen Scheibe zuführbar.

Die Steueröffnung verbindet den Strömungskanal je nach Stellung der dynamischen Scheibe mit zumindest einem der Abläufe. Die Abläufe des Membranventils sind insbesondere nach Art von Öffnungen in der statischen Scheibe ausgebildet. Eine Verbindung zwischen dem Strömungskanal und zumindest einem der Abläufe wird insbesondere dann hergestellt, wenn die Steueröffnung der dynamischen Scheibe zumindest teilweise, insbesondere in Längsrichtung des Steuerstabs oder parallel zu einer Drehachse der dynamischen Scheibe, mit zumindest einem der Abläufe fluchtet bzw. zumindest einen der Abläufe überdeckt.

Der Steuerstabs kann mit einem Druckknopf verbunden sein. Der Druckknopf ist insbesondere außerhalb des Gehäuses angeordnet und/oder durch einen Benutzer des Steuerventils betätigbar.

Der Steuerstabs kann durch den Druckknopf in der Längsrichtung verstellbar und um eine Drehachse drehbar sein. Durch Drücken des Druckknopfs ist insbesondere der Steuerstab zum Steuern des Membranventils in der Längsrichtung verstellbar. Durch Drehen des Druckknopfs ist insbesondere der Steuerstab zum Steuern des Mehrwegeventils drehbar.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigt beispielhaft und schematisch:
- Fig. 1:: ein Steuerventil in einer Schnittdarstellung;
- Fig. 2:: eine statische Scheibe des Steuerventils; und
- Fig. 3:: eine dynamische Scheibe des Steuerventils.

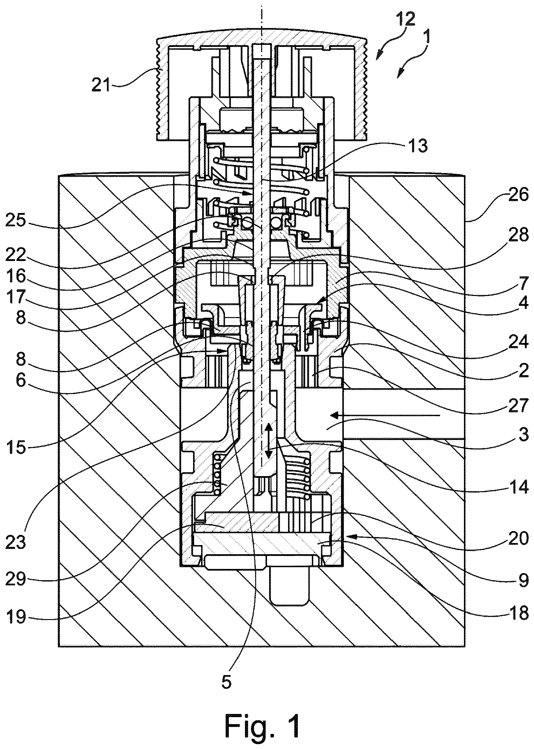

Die Fig. 1 zeigt ein Steuerventil 1 in einer Schnittdarstellung. Das Steuerventil 1 ist hier in einem Träger 26 angeordnet und weist ein Gehäuse 2 mit einem Zulauf 3 auf, über den dem Steuerventil 1 eine Flüssigkeit zuführbar ist. In dem Gehäuse 2 ist ein Membranventil 4 mit einer Membran 6 angeordnet. Die Flüssigkeit strömt von dem Zulauf 3 in eine ringförmige Zulaufkammer 27 und von dort zu dem Membranventil 4. Dort strömt die Flüssigkeit durch eine Ausgleichsbohrung 24 der Membran 6 in eine Gegendruckkammer 7. Die Gegendruckkammer 7 befindet sich auf einer der Zulaufkammer 27 gegenüberliegenden Seite der Membran 6. In einem geschlossenen Zustand des Membranventils 4 herrscht in der Zulaufkammer 27 und der Gegendruckkammer 7 der gleiche Flüssigkeitsdruck. Da die Membran 6 die Gegendruckkammer 7 mit einer größeren Fläche begrenzt als die Zulaufkammer 27, ist die aus dem Flüssigkeitsdruck der Flüssigkeit in der Gegendruckkammer 7 resultierende Kraft auf die Membran 6 im geschlossenen Zustand des Membranventils 4 größer als die aus dem Flüssigkeitsdruck der Flüssigkeit in der Zulaufkammer 27 resultierende Kraft. Hierdurch wird die Membran 6 auf einen ringförmigen Ventilsitz 23 gedrückt, der an einem ersten längsseitigen Ende 15 eines Strömungskanals 5 ausgebildet ist. Im geschlossenen Zustand des Membranventils 4 kann keine Flüssigkeit in den Strömungskanal 5 einströmen.

In der Fig. 1 ist das Membranventil 4 jedoch in einer geöffneten Stellung gezeigt, in der die Membran 6 von dem ringförmigen Ventilsitz 23 (hier vertikal nach oben) abgehoben ist, sodass der Strömungskanal 5 des Steuerventils 1 geöffnet ist. Hierzu ist die Membran 6 in dem Gehäuse 2 beweglich angeordnet. Im geöffneten Zustand des Membranventils 4 bzw. der Membran 6 kann die Flüssigkeit von der Zulaufkammer 27 über den Ventilsitz 23 in den Strömungskanal 5 fließen. Zum Öffnen und Schließen des Membranventils 4 weist das Steuerventil 1 eine Steuerung 12. Die Steuerung 12 umfasst einen Steuerstab 13, der sich durch eine Pilotöffnung 8 der Membran 6 erstreckt. Der Steuerstab 13 ist mit einem Druckknopf 21 verbunden, über den der Steuerstab 13 durch einen Benutzer des Steuerventils 1 zum Steuern des Membranventils 4 in einer Längsrichtung 14 zwischen einer Schließstellung und einer (hier gezeigten) Öffnungsstellung 25 des Steuerstabs 13 verstellbar ist. Die Längsrichtung 14 verläuft parallel zu einer Drehachse 22 des Steuerstabs 13. Der Steuerstab 13 ist durch den Druckknopf 21 insbesondere entweder in der Schließstellung oder der Öffnungsstellung 25 justierbar, beispielsweise verrastbar. Hierzu ist der Druckknopf 21 in der hier gezeigten Ausführungsvariante federnd gelagert. An einer Umfangsfläche 16 des Steuerstabs 13 ist ein ringförmiges Abdichtelement 17 angeordnet, das in der Schließstellung des Steuerstabs 13 an der Pilotöffnung 8 anliegt und einen Ringspalt 28 zwischen dem Steuerstab 13 und der Membran 6 verschließt, sodass über die Pilotöffnung 8 bzw. den Ringspalt 28 keine Flüssigkeit aus der Gegendruckkammer 7 in den Strömungskanal 5 fließen kann. In der hier gezeigten Öffnungsstellung 25 des Steuerstabs 13 ist das Abdichtelement 17 jedoch von der Pilotöffnung 8 der Membran 6 (vertikal nach oben) abgehoben, sodass die Flüssigkeit aus der Gegendruckkammer 7 über die ringförmige Pilotöffnung 8 der Membran 6 bzw. den Ringspalt 28 in den Strömungskanal 5 fließen kann. Hierdurch sinkt der Druck der Flüssigkeit in der Gegendruckkammer 7, sodass die Membran 6 von dem Ventilsitz 23 abgehoben wird.

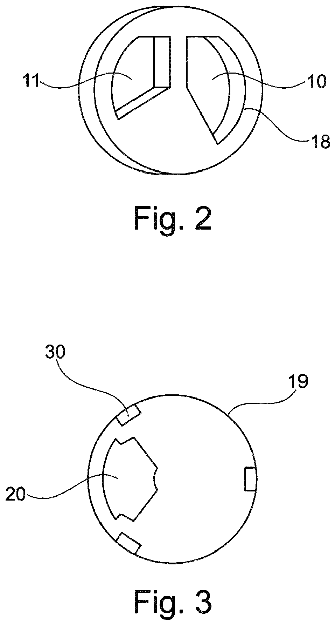

Im geöffneten Zustand des Membranventils 4 fließt die Flüssigkeit über den Strömungskanal 5 zu einem Mehrwegeventil 9. Das Mehrwegeventil 9 ist ebenfalls innerhalb des Gehäuses 2 angeordnet und umfasst eine zum Gehäuse 2 fest angeordnete statische Scheibe 18 und eine auf der statischen Scheibe 18 angeordnete dynamische Scheibe 19. Die dynamische Scheibe 19 ist über einen Mitnehmer 29 mit dem Steuerstab 13 verbunden, sodass die dynamische Scheibe 19 durch einen Benutzer über den Druckknopf 21 und den Steuerstab 13 auf der statischen Scheibe 18 drehbar ist. Die Flüssigkeit strömt zunächst über den Strömungskanal 5 zu einer Steueröffnung 20 der dynamischen Scheibe 19. Die Steueröffnung 20 erstreckt sich in der Längsrichtung 14 vollständig durch die dynamische Scheibe 19. Je nach Drehstellung der dynamischen Scheibe 19 fluchtet die Steueröffnung 20 zumindest teilweise mit einem in der Fig. 2 gezeigten ersten Ablauf 10 und/oder zweiten Ablauf 11 der statischen Scheibe 18. Die Abläufe 10, 11 erstrecken sich ebenfalls in der Längsrichtung 14 vollständig durch die statische Scheibe 18. Fluchtet die Steueröffnung 20 der dynamischen Scheibe 19 zumindest teilweise mit dem ersten Ablauf 10 der statischen Scheibe 18, kann die Flüssigkeit zumindest teilweise über den ersten Ablauf 10 abfließen. Fluchtet die Steueröffnung 20 der dynamischen Scheibe 19 zumindest teilweise mit dem zweiten Ablauf 11 der statischen Scheibe 18, kann die Flüssigkeit zumindest teilweise über den zweiten Ablauf 11 abfließen. Je mehr die Steueröffnung 20 der dynamischen Scheibe 19 eine der beiden Abläufe 10, 11 überschneidet bzw. mit diesen fluchtet, desto größer ist der Volumenstrom der Flüssigkeit, der über den jeweiligen Ablauf 10, 11 abfließt. Die dynamische Scheibe 19 kann beispielsweise um 150° auf der statischen Scheibe 18 drehbar sein. Die statische Scheibe 18 und die dynamische Scheibe 19 können derart ausgestaltet sein, dass bei einem Drehwinkel von 0° bis 120° der dynamischen Scheibe 19 dem ersten Ablauf 10 ein Volumenstrom der Flüssigkeit von 3 bis 9 l/min (Liter pro Minute) zugeführt wird. Weiterhin können die statische Scheibe 18 und die dynamische Scheibe 19 derart ausgestaltet sein, dass bei einem Drehwinkel von 120° bis 150° der dynamischen Scheibe 19 eine Umstellung auf den zweiten Ablauf 11 erfolgt, sodass die Flüssigkeit nur dem zweiten Ablauf 11 zugeführt wird. Von dem ersten Ablauf 10 und dem zweiten Ablauf 11 kann die Flüssigkeit beispielsweise unterschiedlichen Strahlbildnern einer Sanitärarmatur zugeführt werden.

Die Fig. 2 zeigt die statische Scheibe 18 mit dem ersten Ablauf 10 und dem zweiten Ablauf 11 in einer Draufsicht. Zudem zeigt die Fig. 3 die dynamische Scheibe 19 mit der Steueröffnung 20 in einer Draufsicht. Die dynamische Scheibe 19 weist Ausnehmungen 30 auf, in die der nervig. 1 gezeigte Mitnehmer 29 eingreift, sodass der Mitnehmer 29 formschlüssig mit der dynamischen Scheibe 19 verbunden ist.

Durch die vorliegende Erfindung ist ein Steuerventil für eine Sanitärarmatur besonders kompakt ausgestaltbar und leicht zu bedienen.

### Bezugszeichenliste

- 1: Steuerventil
- 2: Gehäuse
- 3: Zulauf
- 4: Membranventil
- 5: Strömungskanal
- 6: Membran
- 7: Gegendruckkammer
- 8: Pilotöffnung
- 9: Mehrwegeventil
- 10: erster Ablauf
- 11: zweite Ablauf
- 12: Steuerung
- 13: Steuerstab
- 14: Längsrichtung
- 15: erstes längsseitiges Ende
- 16: Umfangsfläche
- 17: Abdichtelement
- 18: statische Scheibe
- 19: dynamische Scheibe
- 20: Steueröffnung
- 21: Druckknopf
- 22: Drehachse
- 23: Ventilsitz
- 24: Ausgleichsbohrung
- 25: Öffnungsstellung
- 26: Träger
- 27: Zulaufkammer
- 28: Ringspalt
- 29: Mitnehmer
- 30: Ausnehmung

## Patentansprüche

1. Steuerventil (1) für zumindest eine Sanitärarmatur, zumindest aufweisend:
- ein Gehäuse (2) mit zumindest einem Zulauf (3) für eine Flüssigkeit;
- ein Membranventil (4) zum Öffnen und Schließen eines Strömungskanals (5) des Steuerventils (1), wobei das Membranventil (4) eine Membran (6) und eine mit dem zumindest einen Zulauf (3) verbundene Gegendruckkammer (7) aufweist und wobei in der Membran (6) eine Pilotöffnung (8) ausgebildet ist, die die Gegendruckkammer (7) mit dem Strömungskanal (5) verbindet;
- ein Mehrwegeventil (9), das stromabwärts des Membranventils (4) angeordnet ist, eine Mehrzahl von Abläufen (10, 11) für die Flüssigkeit aufweist, wobei jeder der Abläufe (10, 11) mit einem separaten Strahlbildner der Sanitärarmatur verbindbar ist; und
- eine Steuerung (12) zum Steuern des Membranventils (4) und des Mehrwegeventils (9), **dadurch gekennzeichnet, dass** die Steuerung (12) einen Steuerstab (13) aufweist, der sich durch die Pilotöffnung (8) der Membran (6) erstreckt, wobei der Steuerstab (13) zum Steuern des Membranventils (4) in einer Längsrichtung (14) verstellbar und zum Steuern des Mehrwegeventils (9) drehbar ist.

2. Steuerventil (1) nach Patentanspruch 1, wobei das Membranventil (4) an einem ersten längsseitigen Ende (15) des Strömungskanals (5) angeordnet ist.

3. Steuerventil (1) nach einem der vorhergehenden Patentansprüche, wobei der Strömungskanal (5) das Membranventil (4) mit dem Mehrwegeventil (9) verbindet.

4. Steuerventil (1) nach einem der vorhergehenden Patentansprüche, wobei an einer Umfangsfläche (16) des Steuerstabs (13) ein Abdichtelement (17) angeordnet ist, mit dem die Pilotöffnung (8) der Membran (6) durch den Steuerstab (13) verschließbar ist.

5. Steuerventil (1) nach einem der vorhergehenden Patentansprüche, wobei das Mehrwegeventil (9) eine statische Scheibe (18) und eine auf der statischen Scheibe (18) bewegbar angeordnete dynamische Scheibe (19) aufweist.

6. Steuerventil (1) nach Patentanspruch 5, wobei die dynamische Scheibe (19) durch den Steuerstab (13) drehbar ist.

7. Steuerventil (1) nach Patentanspruch 5 oder 6, wobei die dynamische Scheibe (19) zumindest eine Steueröffnung (20) aufweist.

8. Steuerventil (1) nach Patentanspruch 7, wobei die Steueröffnung (20) den Strömungskanal (5) je nach Stellung der dynamischen Scheibe (19) mit zumindest einem der Abläufe (10, 11) verbindet.

9. Steuerventil (1) nach einem der vorhergehenden Patentansprüche, wobei der Steuerstab (13) mit einem Druckknopf (21) verbunden ist.

10. Steuerventil (1) nach Patentanspruch 6, wobei der Steuerstab (13) durch den Druckknopf (21) in der Längsrichtung (14) verstellbar und um eine Drehachse (22) drehbar ist.

## Claims

1. A control valve (1) for at least one sanitary fitting, at least comprising:
- a housing (2) having at least one inlet (3) for a liquid;
- a diaphragm valve (4) for opening and closing a flow channel (5) of the control valve (1), wherein the diaphragm valve (4) has a diaphragm (6) and a counterpressure chamber (7) connected to the at least one inlet (3), and wherein a pilot orifice (8) is formed in the diaphragm (6), which pilot orifice connects the counterpressure chamber (7) to the flow channel (5);
- a multi-way valve (9) disposed downstream of the diaphragm valve (4) and having a plurality of outlets (10, 11) for the liquid, wherein each of the outlets (10, 11) can be connected to a separate spray plate; and
- a controller (12) for controlling the diaphragm valve (4) and the multi-way valve (9), **characterized in that** the controller (12) comprises a control rod (13) extending through the pilot orifice (8) of the diaphragm (6), wherein the control rod (13) can be adjusted in a longitudinal direction (14) for controlling the diaphragm valve (4) and can be rotated for controlling the multi-way valve (9).

2. The control valve (1) according to claim 1, wherein the diaphragm valve (4) is disposed on a first longitudinal end (15) of the flow channel (5).

3. The control valve (1) according to any one of the preceding claims, wherein the flow channel (5) connects the diaphragm valve (4) to the multi-way valve (9).

4. The control valve (1) according to any one of the preceding claims, wherein a sealing element (17) is disposed on a circumferential surface (16) of the control rod (13), which sealing element can be used by the control rod (13) to close the pilot orifice (8) of the diaphragm (6).

5. The control valve (1) according to any one of the preceding claims, wherein the multi-way valve (9) comprises a static disk (18) and a dynamic disk (19) movably disposed on the static disk (18).

6. The control valve (1) according to claim 5, wherein the dynamic disk (19) can be rotated by the control rod (13).

7. The control valve (1) according to claim 5 or 6,
wherein the dynamic disk (19) has at least one control aperture (20).

8. The control valve (1) according to claim 7, wherein the control aperture (20) connects the flow channel (5) to at least one of the outlets (10, 11) depending on the position of the dynamic disk (19).

9. The control valve (1) according to any one of the preceding claims, wherein the control rod (13) is connected to a push button (21).

10. The control valve (1) according to claim 6, wherein the push button (21) can be used to adjust the control rod (13) in the longitudinal direction and to rotate it about an axis of rotation (22).

## Revendications

1. Soupape de commande (1), destinée à au moins une robinetterie sanitaire, comportant au moins:
- un corps (2), pourvu d'au moins une arrivée (3) pour un liquide ;
- une soupape (4) à membrane, destinée à ouvrir et à fermer une canalisation (5) d'écoulement de la soupape de commande (1), la soupape (4) à membrane comportant une membrane (6) et une chambre de contre-pression (7) reliée avec l'au moins une arrivée (3) et dans la membrane (6) étant conçue une ouverture pilote (8) qui relie la chambre de contre-pression (7) avec la canalisation (5) d'écoulement ;
- une soupape multivoies (9), qui est placée en aval de la soupape (4) à membrane, comporte une pluralité d'évacuations (10, 11) pour le liquide, chacune des évacuations (10, 11) étant susceptible d'être reliée avec des formateurs de jet séparés de la robinetterie sanitaire ; et
- un système de commande (12), destiné à commander la soupape (4) à membrane et la soupape multivoies (9), **caractérisée en ce que** le système de commande (12) comporte une barre de commande (13) qui s'étend à travers l'ouverture pilote (8) de la membrane (6), pour commander la soupape (4) à membrane, la barre de commande (13) étant ajustable dans une direction longitudinale (14) et étant rotative pour commander la soupape multivoies (9).

2. Soupape de commande (1) selon la revendication 1 du brevet, la soupape (4) à membrane étant placée sur une première extrémité (15) longitudinale de la canalisation (5) d'écoulement.

3. Soupape de commande (1) selon l'une quelconque des revendications précédentes du brevet, la canalisation (5) d'écoulement reliant la soupape (4) à membrane avec la soupape multivoies (9).

4. Soupape de commande (1) selon l'une quelconque des revendications précédentes du brevet, sur une surface périphérique (16) de la barre de commande (13) étant placé un élément d'étanchéité (17), à l'aide duquel l'ouverture pilote (8) de la membrane (6) peut se fermer par la barre de commande (13).

5. Soupape de commande (1) selon l'une quelconque des revendications précédentes du brevet, la soupape multivoies (9) comportant un disque (18) statique et un disque (19) dynamique placé en étant mobile sur le disque (18) statique.

6. Soupape de commande (1) selon la revendication 5 du brevet, le disque (19) dynamique étant susceptible d'être mis en rotation par la barre de commande (13).

7. Soupape de commande (1) selon la revendication 5 ou 6 du brevet, le disque (19) dynamique comportant au moins un orifice de commande (20).

8. Soupape de commande (1) selon la revendication 7 du brevet, en fonction de la position du disque (19) dynamique, l'orifice de commande (20) reliant la canalisation (5) d'écoulement avec au moins l'une des évacuations (10, 11).

9. Soupape de commande (1) selon l'une quelconque des revendications précédentes du brevet, la barre de commande (13) étant reliée avec un bouton-pression (21) .

10. Soupape de commande (1) selon la revendication 6 du brevet, la barre de commande (13) étant ajustable par le bouton-pression (21) dans la direction longitudinale (14) et étant rotative autour d'un axe de rotation (22).
